# EUROPEAN PATENT APPLICATION

(11) **EP 3 476 802 A1**
(43) Date of publication of application: **01.05.2019**
(21) Application number: 18425037.1
(22) Date of filing: 17.05.2018
(51) Int. Cl.: C01B 32/174, B82Y 30/00, B82Y 40/00, H01M 4/00, C01B 32/18

(54) **PROCESSING OF OPTICALLY ACTIVE TERRESTRIAL CARBON FORMS**

(30) Priority: 30.10.2017 IT 201700123515 U
(71) Applicant: La Torre, Alessandro, 65128 Pescara (IT)
(72) Inventor: La Torre, Alessandro, 65128 Pescara (IT)

(57) **Abstract**

Nanomaterials are often associated with unsustainable or harmful elements, such as rare or toxic metals in quantum dots, or suffer from the lack of reproducibility (*e*.*g*. carbon nanotubes), which hinders significantly their exploitation. Furthermore, some of the 'hottest' carbon nanomaterials, such as "graphene", lack essential functional characteristics, such as optical and suffer from a lack of scalability, which renders their applications for devices limited at this current time. In this patent application, I propose to progress the fabrication of carbon nanomaterials to solve various outstanding challenges, through innovative nanoprocessing, leading to the development of optically active carbon nanostructures. The main emphasis will be placed on synthesis and assembly, with a very high degree of precision, achieved through innovative chemical processing (Figure 1), leading to new ways to control the size, shape, structure, morphology and connectivity of nanostructured materials and devices. Herein, the thermal evolution of the organic capping layer stabilising metal nanoparticles is described. The functional properties of the thermal evolved organic layer are dictated by the carbonization process conditions. The transformation of the organic layers was monitored and investigated through complementary electron microscopy and spectroscopy techniques (Figure 2 e 3). The new carbon materials present remarkable photo-luminescence property assessed by energy loss spectroscopy and complementary techniques (Figure 4); Electron energy loss spectroscopy (EELS) (Figure 3a) and energy dispersive X-ray spectroscopy (EDS) (Figure 3b and inset) indicate that the structures formed in this process consist of 98.8 wt% of carbon and 1.2 wt% of sulfur. Further analysis confirmed the presence of Calcium, Sodium (Figure 4a and 5) and Potassium. Developing an effective strategy to build functional carbon materials with well-organized architectures and unprecedented morphologies would give a momentum to the commercialisation of such materials, ranging from energy storage matrices such as batteries and supercapacitors, optics, computing, to also a wide range of applications in healthcare.
The hybrid structure formed bear resembles of the mysterious interstellar carbon dust known as **"Chaiote".** Carbon is the most abundant element on earth widely available. The CNC technology will be fully sustainable. It will bring down the cost of device production, as the fabrication of CNC's (Figure 2 e 6) and Nanoparticles films (Figure 2a) are not expensive and cheaper than another semiconductors technology used for instance in solar cell. According to theoretical modeling the CNC tensile strength is bigger than the well-known carbon forms present in today market. CNC can be fabricated using different organic layers rendering doped CNC with N, P, O, S, F. When xylene is used as organic layer the manganese particles presents magnetic propriety (Figure 7). The CNC are produced on surfaces of BN, carbon fibres, Si₃N₄ (Figure 6), glass and quartz. The CNC grown on and in carbon nanofibres forms a **nanoreactor** (Figure 8, 9, 10 e 11) suitable for purification and desalination of sea water. It also suitable for chemical of reactions ranging from hydrogenation to reduction and decomposition of NO, NO₂ and CO₂ to CO oxidation and electrochemical reactions. Using a commercial solution of nanopowder coated with Polyvinylpyrrolidone the CNC can also be grown as free standing foams as shown in (Figure 12).
Carbon can also be shaped into nanowires as shown in Figure 13 remarkably presenting insulator behaviours.

Finally, It is important to report that free standing Ag, Au, Mn, nanoparticles posses already interesting optical properties. In addition Mn, Fe and Ni possess magnetic properties. The thermal evolution experiments are aimed at extruding the metal content from the nanoparticles and intercalate the ions into a solid carbon matrix shaped as a carbon cup (CNC).

## Description

A commercial suspension of hexagonal boron nitride sheets (of lateral size 50-200 nm and thickness 1-5 layers, and bought at graphene supermarket) was deposited on a gold mesh finder transmission electron microscopy (TEM) grid and heated in air at 500 °C to remove adventitious carbon. Silver nanoparticles (AgNPs) were synthesized either by a modified Kang and Kim method or a modified Brust method. In the Kang Kim method dodecanethiol (0.4 mmol) was added to a solution of silver nitrate (0.9 mmol) in ethanol (30 mL) and the mixture was stirred vigorously for 10 mins at room temperature. A saturated solution of sodium borohydride in ethanol (60 mL) was then added to the mixture and stirred vigorously for 2 hours at room temperature. The resulting solution was dried over calcium and sodium sulphate and concentrated to (c.a. 5 ml) under vacuum. The product was precipitated from solution by the further addition of ethanol (350 mL) before storing at -30°C for 24 hours. The precipitate was then filtered using a 0.45 µm pore size polytetrafluoroethylene (PTFE) membrane and washed with ethanol (250 mL) and acetone (250mL) before final drying under vacuum to yield a black solid (c.a. 180 mg of AgNPs).

In regards of the Brust method, to an aqueous solution of silver nitrate (c.a. 0.2 mmol) in water (30 ml) was added a solution containing tetraoctylammonium bromide (0.4 mmol) in toluene (60 mL) and the mixture vigorously stirred at room temperature for 10 mins. To this mixture was added a solution containing dodecanethiol (0.2 mmol) in toluene (10 mL) and the mixture vigorously stirred at room temperature for 10 mins. To the reaction mixture was added a further solution containing sodium borohydride (2 mmol) in dionised water (30 mL) and the resulting mixture vigorously stirred at room temperature for 20 hours. The biphasic mixture was then separated, retaining the organic layer, which was washed with water (3x100 ml) and dried over calcium and sodium sulphate. The supernatant was removed and concentrated (ca. 5 mL) under vacuum and the product precipitated from solution by the addition of ethanol (350 mL) and storing at -30 °C for 24 hours. The resulting precipitate was filtered through 0.45 µm pore size PTFE membrane, the solid washed with ethanol (250 mL) and acetone (250 mL) and finally dried under vacuum to yield a brown solid product (c. a. 44 mg).

### The AgNP already possesses interesting functional properties.

In both cases, a suspension of AgNPs in cyclohexane was prepared using a ratio of 1 mg of AgNPs to 1 ml of cyclohexane.

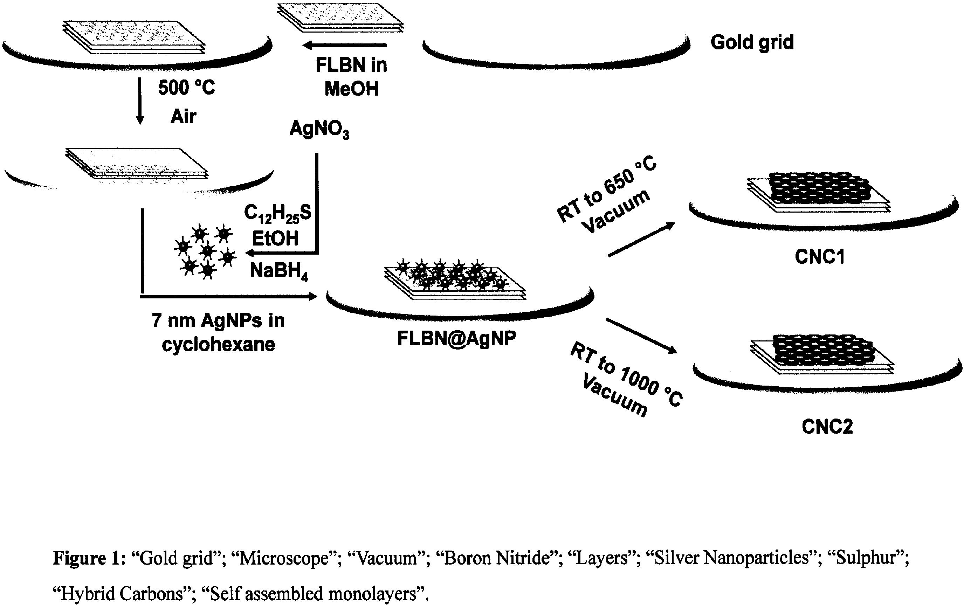

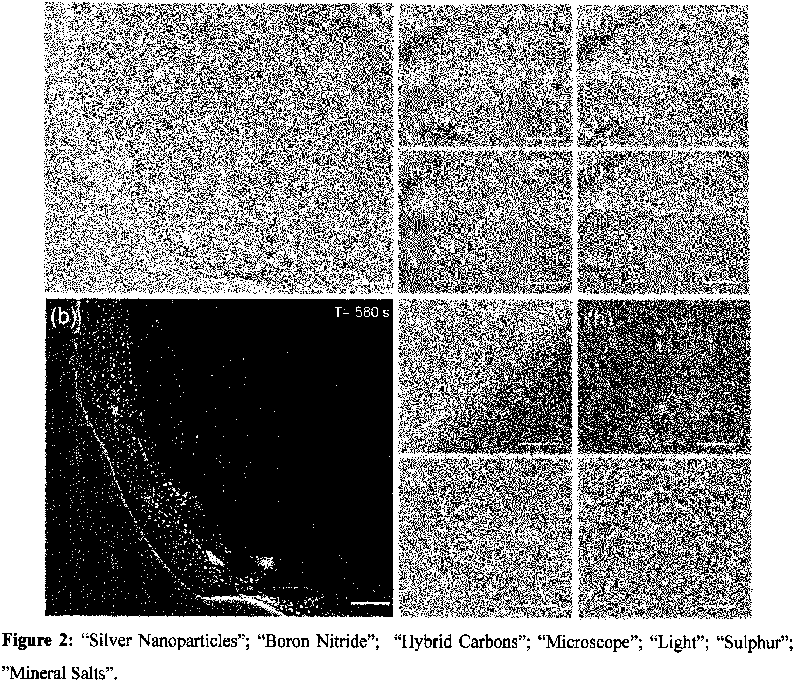

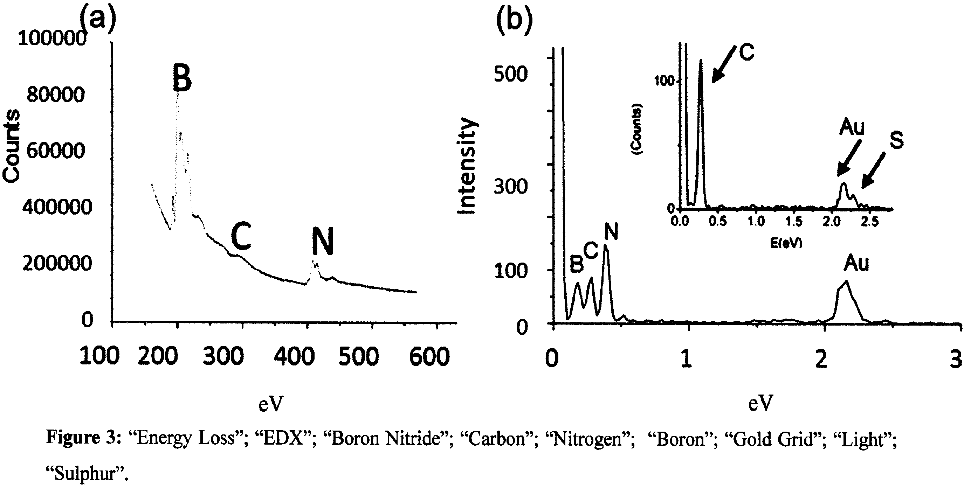

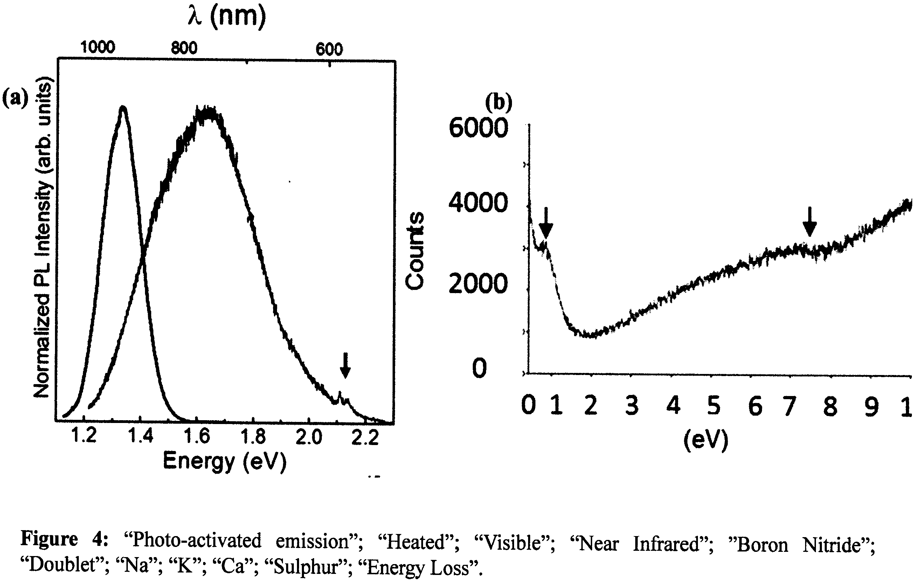

The AgNPs were deposited from solution onto h-BN on a TEM grid and heated in a TEM holder, in a vacuum of 10⁻⁵ Pa within the TEM column, by rapidly increasing the temperature from RT to 650 °C to form CNC1 and RT to 1000 °C to form CNC2 (Figura 2). To fabricate the CNC outside the column of a transmission electron microscope the AgNPs deposited from solution onto h-BN were inserted into a tube furnace under an inert atmosphere of argon at 650 °C and 1000 °C for 10 minutes to form CNC1 and CNC2 respectively.

### Growth of optically active terrestrial carbon form on and in PD50 nanofibres

The CNC were also grown on commercial PD50 fibres (CNF). As-received PD50 (5 mg bought from Nano Lab) were heated at 400 °C for 30 minutes in air, cooled down to room temperature and added to a suspension of dodecanethiolated-stabilised AgNP (5.0 mg) in cyclohexane. The resulting mixture was treated with ultrasound at room temperature for 30 minutes, transferred into a round bottom flask and stirred for 20 minutes at room temperature. Cyclohexane was added and slowly evaporated under vacuum. The procedure was repeated three times.

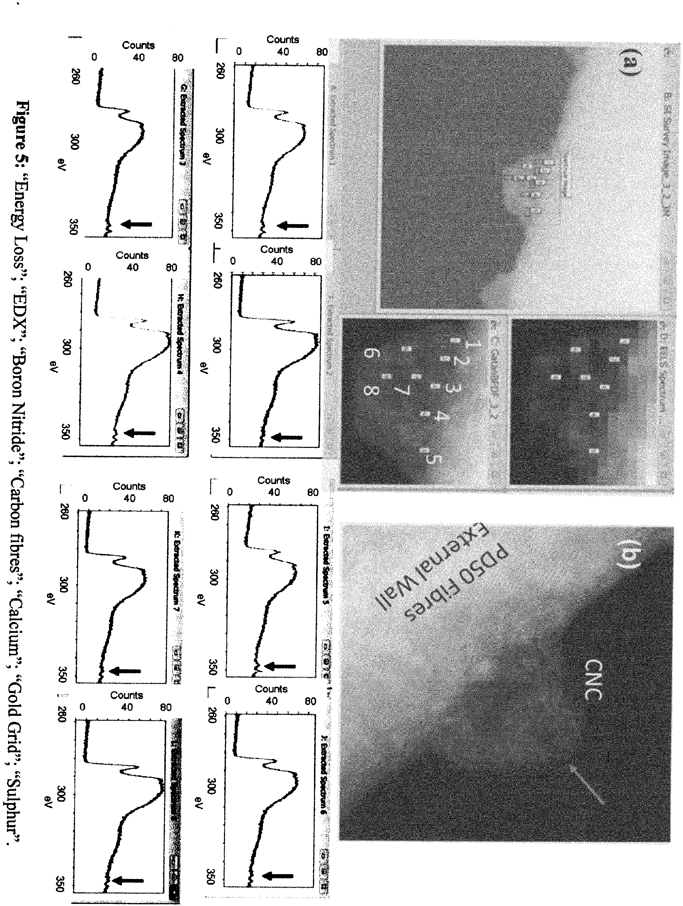

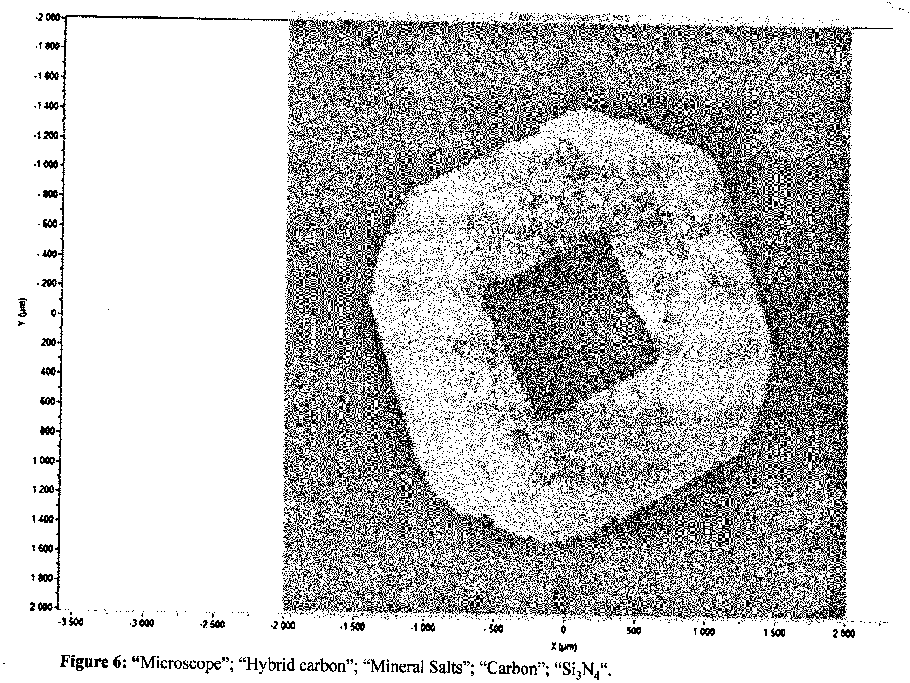

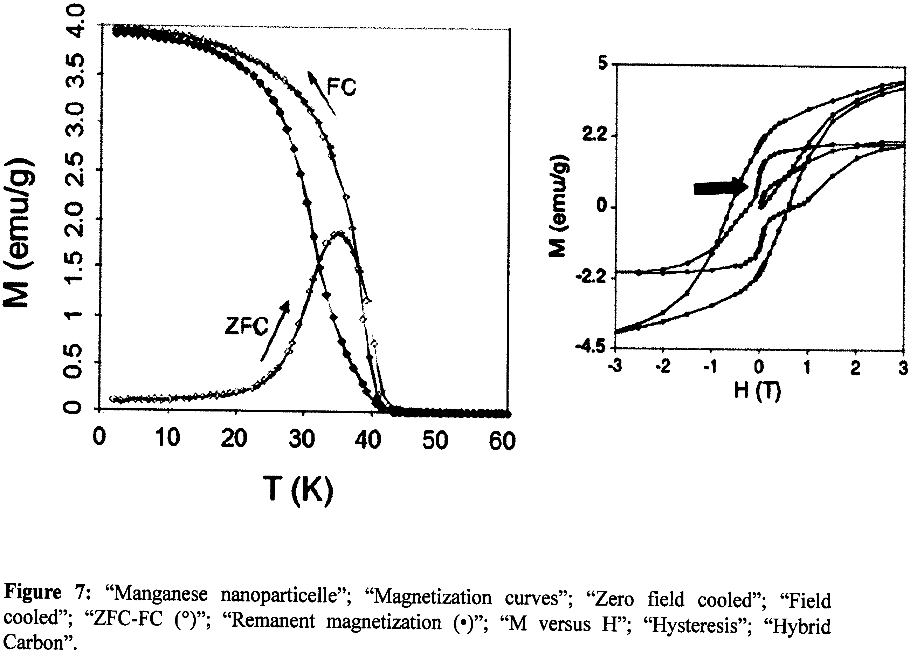

The resulting suspensions were filtered through a PTFE membrane filter (pore size 0.45 µm), washed with cyclohexane, ethanol and finally acetone to yield a black solid product (9.8 mg of AgNP@PD50). ***The AgNP@PD50 possesses already interesting functional properties.*** In addition, the AgNP@PD50 solid was inserted into a tube furnace under an inert atmosphere of argon and heated at 650 °C and 1000 °C for 10 minutes to form CNC1 and CNC2 respectively (Figure 5).

### CNC can also be grown using alkylthiol stabilized gold as following:

To an aqueous solution of tetrachloroauric acid trihydrate (0.2 mmol) in water (30 ml) was added a solution containing tetraoctylammonium bromide (0.4 mmol) in toluene (60 mL) and the mixture vigorously stirred at room temperature for 10 mins. To this mixture was added a solution containing dodecanethiol (0.2 mmol) in toluene (10 mL) and the mixture vigorously stirred at room temperature for 10 mins. To the reaction mixture was added a further solution containing sodium borohydride (2 mmol) in water (30 mL) and the resulting mixture vigorously stirred at room temperature for 20 hours. The biphasic mixture was then separated, retaining the organic layer, which was washed with water (3x100 ml) and dried over calcium and sodium sulphate. The supernatant was removed and concentrated (ca. 5 mL) under vacuum and the product precipitated from solution by the addition of ethanol (350 mL) and storing at -30 °C for 24 hours. The resulting precipitate was filtered through 0.45 µm pore size PTFE membrane, the solid washed with ethanol (250 mL) and acetone (250 mL) and finally dried under vacuum to yield a brown solid product (38 mg). ***The AuNP already possesses interesting functional properties.***

The deposition of AuNP on supports (h-BN and PR24) and their processing can be seen in the two sections *Processing of optically active terrestrial carbon form and growth of optically active carbon form in PR24 nanofibres*

### Growth of optically active terrestrial carbon form in PR24 nanofibres

The CNC were also grown on commercial PR24 nanofibres (bought from Pyrogragh). As-received PR24 were heated at 400 °C for 30 minutes in air, cooled down to room temperature and added to a suspension of alkylthiol stabilized gold nanoparticles (5.0 mg) in hexane. The PR24 nanofibres step edges present the most favorable morphology for the anchoring of alkylthiol stabilised gold nanoparticles as their average size diameter 3.3 nm matches the height of the step edge step.

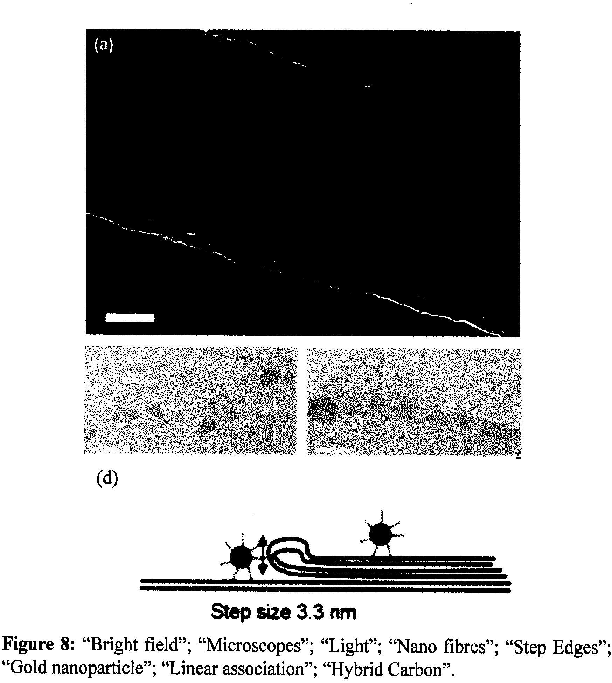

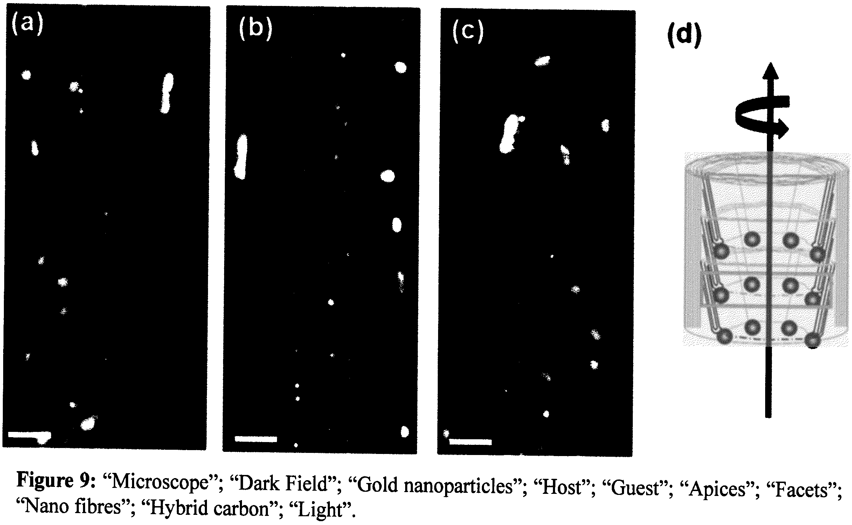

The resulting mixture was treated with ultrasound at room temperature for 30 minutes, transferred into a round bottom flask and stirred for 20 minutes at room temperature. Hexane was added and slowly evaporated under vacuum. The procedure was repeated three times. The resulting suspensions were filtered through a PTFE membrane filter (pore size 0.45 µm), washed hexane, ethanol and finally acetone to yield a black solid product (9.8 mg of AuNP@GNF) (Figure 8). ***The AuNP@GNF possesses already interesting functional properties**.* In addition, The AuNP@GNF were inserted into a tube furnace under an inert atmosphere of argon, heated at 650 °C and 1000 °C for 10 minutes to form CNC1 and CNC2 respectively. (Figure 9)

### CNC can also be grown using fluoro-alkylthiol stabilized gold as following:

To an aqueous solution of tetrachloroauric acid trihydrate (0.2 mmol) in water (24 ml) was added a solution containing tetraoctylammonium bromide (0.4 mmol) in toluene (48 mL) and the mixture vigorously stirred at room temperature for 10 mins. To this was added heptafluoro-1-decanthiol (0.2 mmol) and the mixture vigorously stirred at room temperature for 10 mins. To the reaction mixture was added a further solution containing sodium borohydride (2 mmol) in water (30 mL) and the resulting mixture vigorously stirred at room temperature for 20 hours. The product was extracted with perfluoro-hexane (3x10 mL), washed with dionised water (3x 10 ml) dried over calcium sulphate. The solvent was removed in vacuuo, re-suspended in acetone (50 ml), deionized water (50 ml), hot chloroform (2x50 ml) and hot ethanol (2x50ml) and finally sucked dry to yield a brown solid (36 mg). ***The AuNP already possesses interesting functional properties**.* In addition, the deposition or insertions of AuNP on supports (h-BN and PR24) and their processing can be seen in the two sections above *Processing of an optically active terrestrial carbon form, and growth of optically active terrestrial carbon form in PR24 nanofibres*

### CNC containing C and P atoms can also be grown using trioctyl phosphine stabilized metallic Nickel nanoparticles as following:

Ni-oleylamine complex was prepared by reacting nickel(acetylacetonate)₂ [Ni(acac)₂], (0.52 g) with 2 cm² of oleylamine (Aldrich Chemical Co., technical grade, 80%) in a Schlenk flask sealed under Argon stmosphere at 100 °C. The blue resulting metal complex mixture was transferred under argon into a three neck round bottom flask with trioctylphosphine (TOP, 5g Aldrich Chemical Co., technical grade, 90%) under argon. The temperature was kept constant and raised up to 215 °C, the colour of the solution changes from green to black indicating that the colloidal were generated. The black solution was aged at 200 °C for 30 min. The precipitated nanoparticles were cooled to room temperature and 20 cm² of ethanol was added. The mixture was centrifuged at 8040 g/min for half an hour. The procedure was repeated three times to yield metallic nickel particles stabilized by TOP. The diameter of the nickel particles of 3.3 nm matches the height of the step edges residing inside the nanofibers (Figure 8d). The deposition or insertions of Nickel nanoparticles on supports (h-BN and PR24) and their processing can be seen in the sections above *Processing of optically active terrestrial carbon form, and growth of optically active terrestrial carbon form in PR24 nanofibres*

### CNC containing C and O can be grown using oleic acid stabilised metallic iron particles

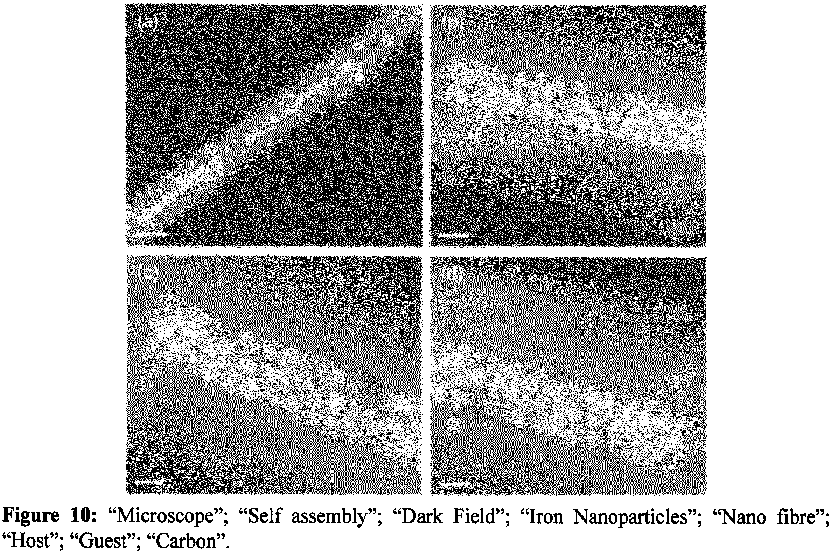

The synthesis of oleic acid stabilised spheroidal iron nanoparticles NPs was performed using a multi-step organic-phase synthesis of nanoparticles. During the first step of the synthesis, spheroidal NPs were synthesised *via* the reaction of iron (III) acetylacetonate, in phenyl ether in the presence of alcohol, oleic acid, and oleylamine at 265 °C in nitrogen. The product was dissolved in hexane in the presence of oleic acid, oleylamine, and precipitated with ethanol to form 8 nm semi-spherical NPs. To make larger nanoparticles, a seed-mediated growth method was used. The 8 nm semi-spherical NPs were mixed and heated with iron (III) acetylacetonate, steryl alcohol, oleic acid and oleylamine, yielding 16 ± 3.8 nm semi-spherical NPs (Fig 18a-d). HRTEM imaging showed that the NPs are faceted. In addition, the NPs size distribution is not homogeneous. The deposition or insertions of oleic acid iron nanoparticles on and in supports (h-BN and CNF) and their processing can be seen in the sections above *Processing of optically active terrestrial carbon form, and growth of optically active terrestrial carbon form in and on CNF (Figura 10)*

### CNC containing solely C can be grown using xylene metallic manganese particles

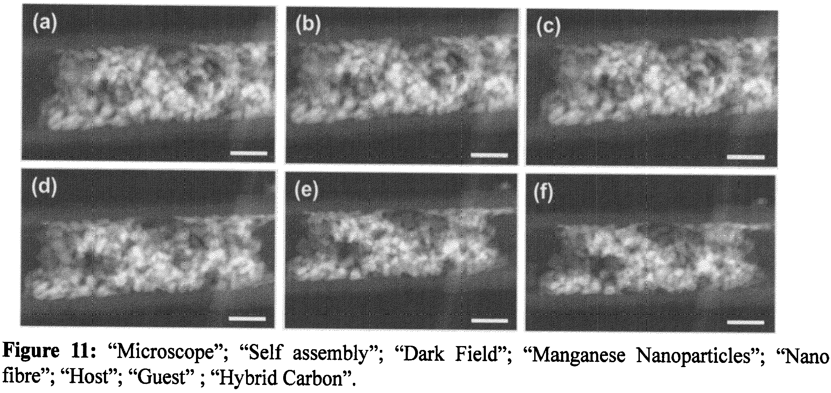

The synthesis of xylene stabilised manganese nanoparticles was used using 10 mmol of manganese (II) acetate and 120 mmol of oleylamine were dissolved in 150 mL of xylene. After heating at 90 °C in air for 6 hours, 1 mL of water was added to the brown solution under vigorous stirring, and the resulting suspension was kept at 90 °C for a further 2 hours. To precipitate the nanoparticles, ethanol (100 mL) was added to the reaction mixture, and the manganese nanoparticles were isolated by centrifugation. The resulting precipitate was dissolved in hexane and precipitated again by adding ethanol. This process was repeated three times to remove the excess of oleylamine. The obtained capped Mn capped with xylene nanobricks "nano platelets" could be well dispersed in organic solvents such as hexane, toluene or chloroform. The deposition or insertions of xylene metallic nanoparticles on and in supports (h-BN and CNF) and their processing can be seen in the sections above (Figure 11). *Processing of optically active terrestrial carbon form, and growth of optically active terrestrial carbon form in and on CNF*

### CNC containing C and N atoms can be grown using PVP stabilised silver nanoparticles as following:

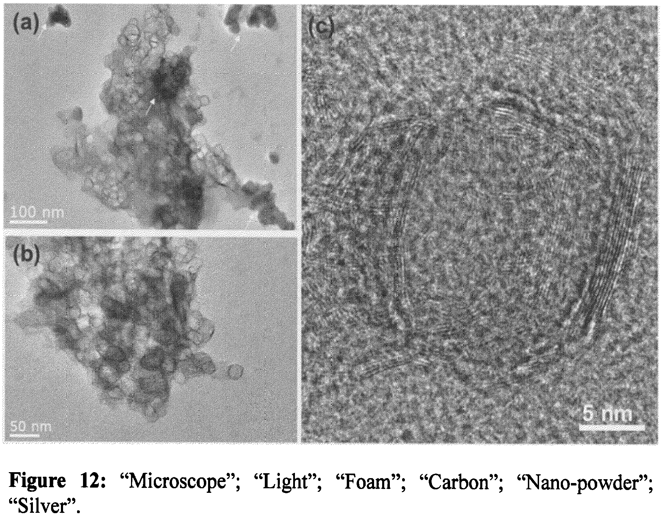

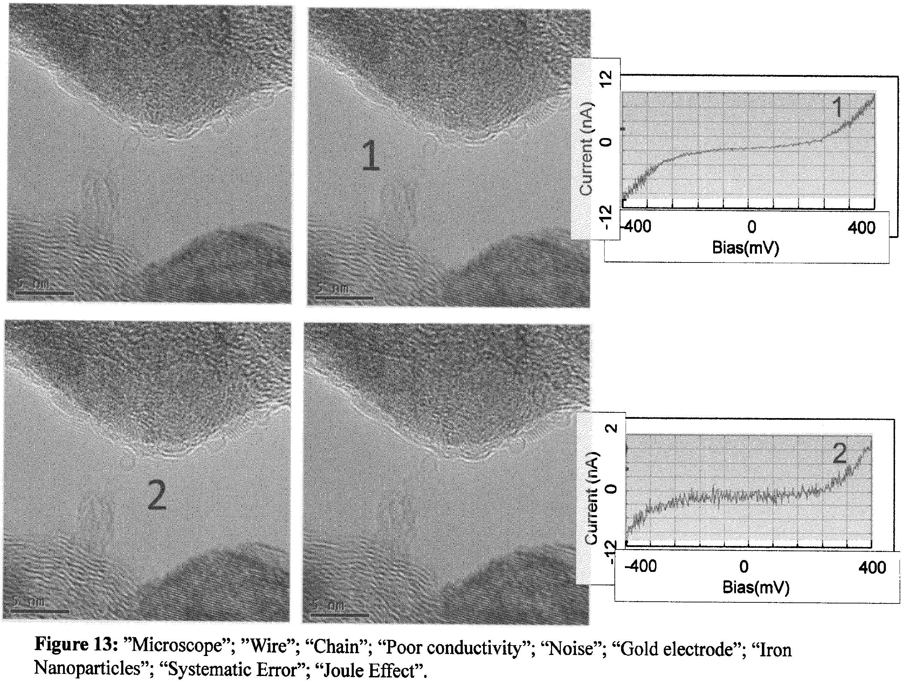

The nanopowder, <100 nm particle size, contains PVP as dispersant, 99.5% trace metals basis were bought at Aldrich Chemical Co. (CAS Number 7440-22-4). The nanopowder deposited on a TEM grid and heated in a tube furnace under argon at 650 °C to yield CNC foams. (Figure 12)

### Processing of carbon into Carbon wires

Carbon can also be shaped into nanowires. I developed a unique fabrication process that transforms carbon nanostructures into carbon wires to form nano-junctions. The new process employs a movable Au electrode with a Fe nanoparticle on its tip. When the Fe nanoparticle is in contact with the "pyrolytic" carbon electrode, the current passed through triggers the welding between iron and carbon ('nano-welding') so that when the tip is slowly retracted, carbon wires are extracted. The Joule effect allows the carbonization process to take place. The reliable production of high quality carbon wires enabled, for the first time, full characterisation of their functional properties, such as the insulator behaviour of carbon experimentally demonstrated by the applicant. (13).

## Claims

1. Contains Calcium, Sodium and Potassium; (Figure 4 e 5)

2. Supplied on a variety of substrates including carbon supports, boron nitride and silicon nitride; (Figure 2, 5, 6, 8, 9, 10, 11, 12)

3. Can also be grown inside or outside inorganic and carbon nanofibers and nanotubes; (Figure 5, 9, 10, 11)

4. Controllable average size diameter and morphology from 8 to 20 nm; (Figure 2, 5, 9, 10, 11).

5. Emits light at frequencies ranging from near infrared to ultraviolet; (Figure 4)

6. Suitable for the encapsulation of magnetically orcatalytically active metal, and optically inorganic and organic molecules; (Figure 2, 5, 8, 9, 10, 11).

7. Can be doped with Sulphur, Phosphorus, Fluorine, Nitrogen and Oxygen to tune the CNC functional properties which can be used to form devices predominantly made of carbon; (Figure 3)

8. Can be functionalised with hydrophilic ligands making them water soluble while retaining fluorescence characteristics enabling temperature and pH responsive biosensor devices; (Figure 10)

9. Can be grown as foams; (Figure 12)

10. Can be magnetic whether xylene or similar compounds are used as a nanoparticles stabiliser; (Figure 7)

11. Carbon can be shaped into nanowires possessing insulator behaviours; (Figure 13)
